# EUROPÄISCHE PATENTSCHRIFT

(11) **EP 1 095 552 B1**
(45) Veröffentlichungstag und Bekanntmachung des Hinweises auf die Patenterteilung: **12.12.2007**
(21) Anmeldenummer: 00122940.0
(22) Anmeldetag: 21.10.2000
(51) Int. Cl.: A01C 15/00, A01C 15/12

(54) **Verteilmaschine**
Distributing machine
Machine de distribution

(30) Priorität: 29.10.1999 DE 19952117
(43) Veröffentlichungstag der Anmeldung: 02.05.2001
(60) Teilanmeldung: 07017834.8
(73) Patentinhaber: Amazonen-Werke H. Dreyer GmbH & Co. KG, 49205 Hasbergen (DE)
(72) Erfinder: Scheufler, Bernd, Dr.-Ing., 49205 Hasbergen (DE); Marquering, Johannes, Dipl.-Ing., 49176 Hilter-Borgloh (DE); Dreyer, Justus, Dipl.-Ing., 49205 Hasbergen (DE)

(56) Entgegenhaltungen:
- US-A- 4 124 167
- US-A- 4 266 731
- US-A- 4 277 022
- US-A- 4 405 089
- US-A- 4 422 562

## Beschreibung

Die Erfindung betrifft eine Verteilmaschine gemäß des Oberbegriffes des Patentanspruches 1.

Eine derartige Verteilmaschine ist beispielsweise in der US 42 66 731 beschrieben. Diese als Streuer ausgebildete Verteilmaschine weist in der hinteren Wand des Vorratsbehälters oberhalb des angetriebenen Förderbandes eine durch einen Schieber einstellbare Auslauföffnung auf. Der Schieber ist mittels eines Motors verstellbar, so dass die Auslauföffnung einstellbar ist. Es ist eine elektronische Regeleinrichtung zur Regelung der von dem Dosierorgan dosierten Materialmenge vorgesehen.

Eine weitere Verteilmaschine ist beispielsweise in der DE-OS 195 20 452 beschrieben. Diese Verteilmaschine ist als Großflächendüngerstreuer ausgebildet. In der hinteren Wand des Vorratsbehälters sind oberhalb des angetriebenen Förderbandes zwei jeweils durch einen Schieber einstellbare Auslauföffnungen angeordnet.

Der Erfindung liegt die Aufgabe zugrunde, auf automatische Weise ein leichtes Öffnen des Schiebers und andererseits ein leichtes Anlaufen des Förderorgans in Förderrichtung zu erreichen.

Diese Aufgabe wird erfindungsgemäß durch die Merkmale des Kennzeichens des Anspruches 1 gelöst. Infolge dieser Maßnahmen lässt sich über die Regeleinrichtung das Dosierorgan gezielt ansteuern und die auszubringende Materialmenge entsprechend den gegebenen Verhältnissen einstellen und regeln Weiterhin erfolgt automatisch eine kurzzeitige Reversierung des Förderbandes nur dann, wenn das an der Förderorganantriebswelle anliegende Drehmoment einen bestimmten Wert überschreitet. Das Drehmoment kann direkt durch eine Drehmomentmeßwelle oder indirekt über einen Druckabfall am Hydromotor oder einer Strom- und Spannungsänderung am Elektromotor ermittelt werden.

Um bei Nichtausbringen von Material, an den Stellen, wo keine Materialmenge ausgebracht werden soll, einen Materialstop vor der durch den Schieber geschlossenen Auslauföffnung zu vermeiden, ist vorgesehen, dass bei Einstellung der Ausbringmenge "Null" der Antrieb des Förderorgans vorzugsweise mittels Kuppelelementen stillsetzbar und/oder abschaltbar ist. Hierdurch wird das Material von dem Förderband nicht gegen den Schieber gepresst. Somit verbleibt lockeres Material vor dem die Auslauföffnung verschließenden Schieber, so dass der Schieber anschließend mit leichter Kraft durch das Einstellmittel verstellt werden kann.

Eine vorteilhafte Einstellung der Materialmenge, insbesondere bei Veränderung der Materialmenge wird dadurch erreicht, dass zur Einstellung der Ausbringmenge die Antriebsmittel des Förderbandes zur Einstellung der Fördergeschwindigkeit und die Einstellung des Schiebers einstellbar sind. Hierdurch kann die Förderband-Geschwindigkeit auf die Größe der Auslauföffnung oder umgedreht genau aufeinander abgestimmt werden, so dass ein optimales Einstellverhältnis von Förderband-Geschwindigkeit zur Öffnungsgröße jeweils einzustellen ist.

Um eine ausreichende Größe des Auslaufquerschnittes für die Auslauföffnung bei kleinen Ausbringmengen zu gewährleisten, ist vorgesehen, dass im unteren Ausbringmengenbereich vorrangig eine kleine Bandgeschwindigkeit in Verbindung mit der entsprechenden Schieberstellung gewählt wird.

Eine vorteilhafte Regelung der Ausbringmenge wird, wie Versuche gezeigt haben, dadurch erreicht, dass bei einer Vergrößerung der Ausbringmenge der Durchtrittsquerschnitt der Auslauföffnung durch die Verstellung des Schiebers mit einem Vorlauf gegenüber der Vergrößerung der Fördergeschwindigkeit des Förderbandes vergrößert wird, und dass bei einer Verringerung der Ausbringmenge die Fördergeschwindigkeit des Förderbandes mit einem Vorlauf gegenüber der Verkleinerung des Durchtrittsquerschnittes der Auslauföffnung durch die Verstellung des Schiebers verringert wird. Infolge dieser Maßnahmen wird vermieden, dass bei einer Veränderung der Ausbringmenge sich Material vor dem Schieber in nachteiliger Weise staut.

Um ein leichtes Öffnen der Schieber mit einer geringen Kraft durch das Einstellmittel in jedem Falle sicherzustellen, ist vorgesehen, dass die Regeleinrichtung derart ausgelegt ist, dass vor dem Beginn des Öffnens der Durchtrittsöffnung durch die Verstellung des Schiebers das Förderorgan zumindest einmal zunächst kurzzeitig in der der Förderrichtung entgegengesetzten Richtung antreibbar ist, bevor das Förderorgan in Förderrichtung antreibbar ist, und dass vor dem Antreiben des Förderorgans in Förderrichtung der Schieber mittels der Einstellmittel durch Ansteuerung durch die Regeleinrichtung in seine Öffnungsstellung bringbar ist.

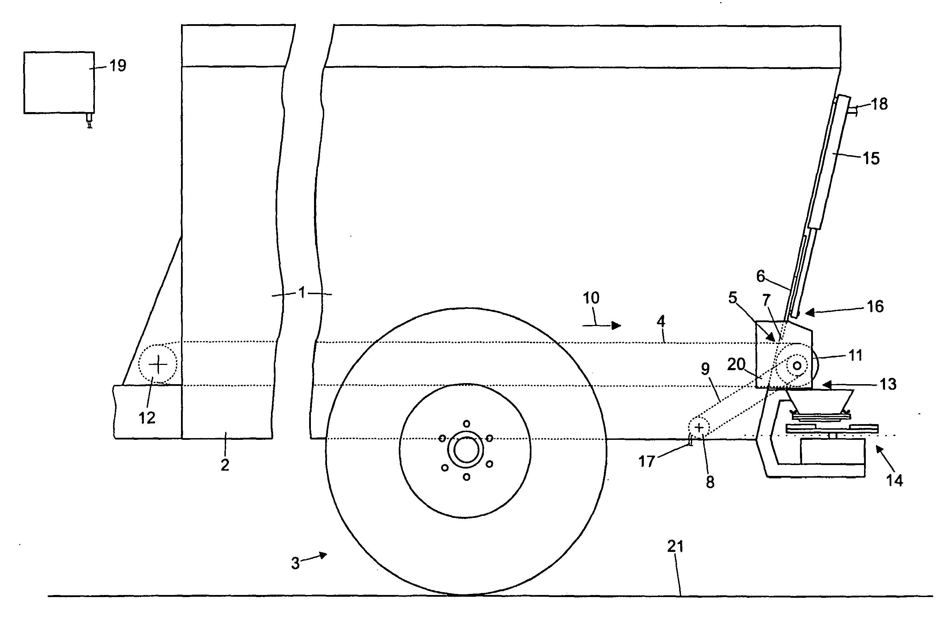

Weitere Einzelheiten der Erfindung sind der Beispielsbeschreibung und der Zeichnung zu entnehmen. Die Zeichnung zeigt
den Großflächendüngerstreuer in Seitenansicht und in Prinzipdarstellung.

Die als Großflächendüngerstreuer ausgebildete Verteilmaschine ist mit einem Vorratsbehälter 1, einem Rahmen 2 und einem Fahrwerk 3 ausgestattet. In dem unteren Bereich des Vorratsbehälters 2 befindet sich zumindest ein antreibbares und als Förderband 4 ausgebildetes Förderorgan. Im hinteren Bereich 5 des Vorratsbehälters 1 sind die beiden nebeneinander jeweils über einen Schieber 6 einstellbaren Auslauföffnungen 7 angeordnet. Das Förderband 4 wird mittels des Antriebsmotors 8 und der Übertragungseinrichtung 9 in der Förderrichtung 10 angetrieben. Dieses Förderband 4 wird über die Antriebsrolle 11 angetrieben und über die Umlenkrolle 12, die im vorderen Bereich angeordnet ist, umgelenkt. Unterhalb des hinteren Endes 13 des Förderbandes 4 ist das als Scheibenstreuwerk ausgebildete Streuorgan 14 angeordnet. Die Schieber 6, mittels denen die Auslauföffnungen 7 einstellbar sind, sind mittels der als Elektromotoren ausgebildeten Einstellmittel 15 einstellbar. Die Auslauföffnungen 7 bilden zusammen mit dem einstellbaren Schieber 6 das Dosierorgan 16.

Der Antriebsmotor 8 und die Einstellmittel 15 sind über Verbindungselemente 17 und 18, die als Kabel ausgebildet sind, mit der elektronischen Regeleinrichtung 19 verbunden. Der elektronischen Regeleinrichtung 19 werden Signale über den zurückgelegten Weg bzw. der Fahrgeschwindigkeit sowie der Größe der eingestellten Querschnitte der Auslauföffnungen 7 sowie die Fördergeschwindigkeit des Förderbandes 4 übermittelt.

Mittels der Regeleinrichtung 19 werden die Einstellmittel 15 und der Antriebsmotor 8 für das Förderorgan angesteuert und entsprechend eingestellt.

Die Funktionsweise der Verteilmaschine ist folgende:

In der Regeleinrichtung 19 sind die Abhängigkeiten von Fördergeschwindigkeit des Förderbandes 4 und Auslauföffnungen 7 eingespeichert, so daß aufgrund dieser Werte die auszubringende Materialmenge durch Ansteuern der Einstellmittel 15 für den jeweiligen Schieber 6 und der Einstellorgane für das Antriebsorgan 8 des Förderbandes 4 eingestellt werden können. Somit ist also zur Regelung der von dem Dosierorgan 16 dosierten Menge die elektronische Regeleinrichtung 19 vorgesehen. Hierbei ist die Regeleinrichtung 19 derart ausgelegt, daß bei Einstellung der Ausbringmenge "Null" der Antrieb des Förderorgans 4 durch Stillsetzen des Antriebsmotors 8 stillgesetzt bzw. abgeschaltet wird. Wenn der Antriebsmotor 8, wie im Ausführungsbeispiel ein Hydraulikmotor ist, wird über die hydraulischen Einstellelemente die Ölzufuhr zu dem Hydraulikmotor 8 unterbrochen. Wenn das Förderband 4 von der Schlepperzapfwelle über eine mechanische Antriebsübertragungseinrichtung angetrieben wird, ist in dem Antriebsstrang eine Kupplung angeordnet, mittels welche das Förderorgan 4 abgeschaltet werden kann. Bei einer mechanischen Antriebsverbindung ist in dem Antriebsstrang ein Schaltgetriebe und stufenlos regelbares Einstellgetriebe angeordnet, um die Fördergeschwindigkeit des Förderbandes 4 einstellen zu können.

Die Regeleinrichtung 19 ist derart ausgelegt, daß zur Einstellung der Ausbringmenge die Antriebsmittel 8 des Förderbandes 4 zur Einstellung der Fördergeschwindigkeit und die Einstellmittel 15 des Schiebers 6 einstellbar sind, in dem die Einstellorgane des Hydraulikmotors 8 bzw. die Einstellmittel 15 für die Schieber 6 entsprechend angesteuert werden. Hierbei wird im unteren Ausbringmengenbereich vorrangig eine kleine Bandgeschwindigkeit des Förderbandes 4 in Verbindung mit einer Schieberstellung des jeweiligen Schiebers 6, die die gewünschte Ausbringmenge gewährleistet, gewählt.

Wenn während des Ausbringens die Ausbringmenge vergrößert werden soll, werden jeweils zunächst mit einem Vorlauf die Einstellmittel 15 der Schieber 6 angesteuert, so daß die Schieber 6 verstellt werden, um den Durchtrittsquerschnitt der Auslauföffnungen 7 zu vergrößern, bevor die Fördergeschwindigkeit des Förderbandes 4 vergrößert wird. Wenn die Ausbringmenge während des Ausbringens verringert werden soll, wird zunächst mit einem Vorlauf die Fördergeschwindigkeit des Förderbandes 4 gegenüber der Verkleinerung des Durchtrittsquerschnittes der Auslauföffnung 7 durch Verstellung des jeweiligen Schiebers 6 verringert. Hierzu werden die Einstellmittel 15 für den Schieber 6 nach dem Antriebsmittel 8 für das Förderorgan 4 angesteuert. Durch diese entsprechende Steuerung, die in der Regeleinrichtung 19 hinterlegt ist, wird vermieden, daß bei einer Ausbringmengenänderung sich ein Materialstau vor dem jeweiligen Schieber 6 bildet. Der Schieber 6 ist durch die erfindungsgemäße Ansteuerungsreihenfolge von Schieber 6 oder Förderband 4 immer leicht bewegbar, da sich nur loses Material und kein sich stauendes Material vor dem Schieber 6 befindet.

Wenn nur ein gemeinsames Förderband 4 für beiden Auslauföffnungen 7 und die beiden zugeordneten Schieber 6 vorhanden ist, ist bei einer einseitigen Ausbringmengenänderung durch Verstellung eines Schiebers 6 und einer Förderbandgeschwindigkeitsänderung eine entsprechende Verstellung des anderen Schiebers 6 zur Gewährleistung der gewünschten Ausbringmenge entsprechend erforderlich.

Wenn nach einer längeren Transportfahrt ohne Ausbringen von Material mit dem Ausbringen des Materials begonnen werden soll, wird durch die Regeleinrichtung 19 das Förderorgan 4 zunächst kurzzeitig entgegen der Förderrichtung 10 vor dem Beginn des Öffnens der Auslauföffnung 7 durch die Verstellung des Schiebers 6 betätigt, damit Material aus dem Bereich der Auslauföffnung 7 vor dem Schieber 6 abgezogen wird, so daß sich hier nur noch lockeres und loses Material oder ein Hohlraum bildet, damit mittels der Einstellmittel 15 die Schieber 6 leicht bewegt werden können. Auch wird hierdurch ein leichteres Anlaufen des Förderorgans 4 in Förderrichtung 10 erreicht. Bevor jetzt das Förderorgan 4 in Förderrichtung 10 angetrieben wird, wird der Schieber 6 mittels der Einstellmittel 15 durch Ansteuerung durch die Regeleinrichtung 19 in seine Öffnungsstellung gebracht, damit der jeweilige Schieber 6 mit leichter Kraft verstellt werden kann.

Um eine Überlastung des Antriebsstranges 8, 9 zu vermeiden, ist in dem Antrieb des Förderorgans 4 eine nicht dargestellte Antriebsleistung- und/oder Drehmomentmeßeinrichtung angeordnet, die das auftretende Drehmoment bzw. die anliegende Leistung mißt. Hierbei ist in der Regeleinrichtung 19 ein festgelegter Antriebsleistung- und/oder Drehmomentgrenzwert eingespeichert. Wenn dieser Grenzwert erreicht bzw. überschritten wird, wird das Förderorgan 4 kurzzeitig entgegen der Fördereinrichtung 10 angetrieben, um das Material aufzulockern. Erforderlichenfalls wird das Förderorgan 4 im Reversierbetrieb mehrfach in einander entgegengesetzten Richtungen kurzzeitig hin und her angetrieben, um eine Auflockerung des Materials vor der Auslauföffnung 7 und in einer kleinen Schicht im Bereich oberhalb des Förderorgans 4 zu erreichen, um ein so leichtes Anlaufen und Antreiben des Förderorgans 4 zu erreichen.

In manchen Fällen kann es sinnvoll sein, einen sogenannten Totzeitabgleich in der Regeleinrichtung 19 zu berücksichtigen. Wenn der jeweilige Schieber in Richtung Schließen bewegt wird, wirkt sich dieses auf den Förderstrom, welcher dem Streuorgan 14 zugeführt wird, verzögert aus (sog. Totzeit).

Durch eine kurzzeitige Veränderung der Fördergeschwindigkeit des Förderbandes 4, in dem das Antriebsorgan 8 des Förderorgans 4 von der Regeleinrichtung 19 entsprechend angesteuert wird, kann diese Totzeit kompensiert werden. Dieses bedeutet, daß bei einer Reduzierung der Ausbringmenge neben einer Verstellung des Schiebers 6 kurzzeitig eine überproportionale Reduzierung der Bandgeschwindigkeit des Förderbandes 4 durch eine entsprechende Ansteuerung des Antriebsorgans 8 des Förderorgans 4 erfolgt. Bei einer Vergrößerung der Ausbringmenge wird kurzzeitig eine überproportionale Vergrößerung der Bandgeschwindigkeit des Förderorgans 4 durch eine entsprechende Ansteuerung des Antriebsorgans des Förderorgans durch die Regeleinrichtung 19 erreicht, so daß auch hier dann die Totzeit entsprechend ausgeschaltet wird.

## Patentansprüche

1. Verteilmaschine mit einem Vorratsbehälter, dessen unterer Boden zumindest ein von einem mittels Antriebsmitteln in einstellbarer Weise antreibbaren umlaufenden, vorzugsweise als Förderband ausgebildeten Förderorgan gebildet wird, welches zusammen mit zumindest einer mittels Schieber einstellbaren Auslauföffnung das Dosierorgan bildet, welches das sich im Vorratsbehälter befindliche Material zumindest einer Verteileinrichtung zuführt, wobei eine elektronische Regeleinrichtung (19) zur Regelung der von dem Dosierorgan (16) dosierten Materialmenge vorgesehen ist, **dadurch gekennzeichnet, dass** dem Antrieb (8) des Förderorgans (4) eine Antriebsleistungs- und/oder Drehmomentmeßeinrichtung zugeordnet ist, dass die Regeleinrichtung (19) mit dieser Meßeinrichtung verbunden ist, dass die Regeleinrichtung (19) derart ausgelegt ist, dass bei Überschreiten bzw. Erreichen eines festgelegten Antriebsleistungs- und/oder Drehmomentgrenzwertes, das Förderorgan (4) kurzzeitig entgegen der Förderrichtung (10) antreibbar ist.

2. Verteilmaschine nach Anspruch 1, **dadurch gekennzeichnet, dass** die Regeleinrichtung derart ausgelegt ist, dass bei Einstellung der Ausbringmenge "Null" der Antrieb (8) des Förderorgans (4) vorzugsweise mittels Kuppelelementen stillsetzbar und/oder abschaltbar ist.

3. Verteilmaschine nach einem oder mehreren der vorstehenden Ansprüche, **dadurch gekennzeichnet, dass** die Regeleinrichtung (19) derart ausgelegt ist, dass zur Einstellung der Ausbringmenge die Antriebsmittel (8) des Förderbandes (4) zur Einstellung der Fördergeschwindigkeit und die Einstellmittel (15) des Schiebers (6) einstellbar sind.

4. Verteilmaschine nach einem oder mehreren der vorstehenden Ansprüche, **dadurch gekennzeichnet, dass** im unteren Ausbringmengenbereich vorrangig eine kleine Bandgeschwindigkeit in Verbindung mit einer Schieberstellung gewählt wird.

5. Verteilmaschine nach einem oder mehreren der vorstehenden Ansprüche, **dadurch gekennzeichnet, dass** bei einer Vergrößerung der Ausbringmenge der Durchtrittsquerschnitt der Auslauföffnung (7) durch die Verstellung des Schiebers (6) mit einem Vorlauf gegenüber der Vergrößerung der Fördergeschwindigkeit des Förderbandes (4) vergrößert wird, und dass bei einer Verringerung der Ausbringmenge die Fördergeschwindigkeit des Förderbandes (4) mit einem Vorlauf gegenüber der Verkleinerung des Durchtrittsquerschnittes der Auslauföffnung (7) durch die Verstellung des Schiebers (6) verringert wird.

6. Verteilmaschine nach einem oder mehreren der vorstehenden Ansprüche, **dadurch gekennzeichnet, dass** die Regeleinrichtung (19) derart ausgelegt ist, dass vor dem Beginn des Öffnens der Durchtrittsöffnung (7) durch die Verstellung des Schiebers (6) das Förderorgan (4) zumindest einmal zunächst kurzzeitig in der der Förderrichtung (10) entgegengesetzten Richtung antreibbar ist, bevor das Förderorgan (4) in Förderrichtung (10) antreibbar ist, und dass vor dem Antreiben des Förderorgans (4) in Förderrichtung (10) der Schieber (6) mittels der Einstellmittel (15) durch Ansteuerung durch die Regeleinrichtung (19) in seine Öffnungsstellung bringbar ist.

## Claims

1. Distributing machine having a hopper, the bottom part of which is formed by at least one rotary conveying member that is configured preferably as a conveyor belt, is driveable by means of driving means in an adjustable manner and, together with at least one discharge opening that is adjustable by means of a slide, forms the metering member, which supplies the material situated in the hopper at least to one distributing device, wherein an electronic regulating device (19) is provided for regulating the amount of material metered by the metering member (16), **characterised in that** a drive output measuring device and/or a torque measuring device is/are associated with the drive (8) of the conveying member (4), **in that** the regulating device (19) is connected to the said measuring device, **in that** the regulating device (19) is designed in such a manner that when an established drive output and/or torque limit value is exceeded or respectively obtained, the conveying member (4) is driveable for a short time in opposition to the conveying device (10).

2. Distributing machine according to claim 1, **characterised in that** the regulating device is designed in such a manner that when the discharge amount "zero" is set, the drive (8) of the conveying member (4) can preferably be shut down and/or switched off by means of coupling elements.

3. Distributing machine according to one or more of the preceding claims, **characterised in that** the regulating device (19) is designed in such a manner that, to adjust the discharge amount, the drive means (8) of the conveyor belt (4) to adjust the conveying speed and the adjusting means (15) of the slide (6) are adjustable,

4. Distributing machine according to one or more of the preceding claims, **characterised in that**, in the region of a smaller discharge amount, first and foremost a low band speed is selected in conjunction with a slide position.

5. Distributing machine according to one or more of the preceding claims, **characterised in that** when the discharge amount is increased, the cross-sectional opening of the discharge opening (7) is enlarged through the adjusting of the slide (6) with a forward movement relative to the increase in the conveying speed of the conveyor belt (4), and **in that** when there is a reduction in the discharge amount, the conveying speed of the conveyor belt (4) is decreased with a forward movement relative to the reduction in the cross-sectional opening of the discharge opening (7) through the adjusting of the slide (6).

6. Distributing machine according to one or more of the preceding claims, **characterised in that** the regulating (19) is designed in such a manner that before the start of the opening of the opening (7) by means of the adjusting of the slide (6), the conveying member (4) is driveable at least once initially for a short period in the direction in opposition to the conveying direction before the conveying member (4) is driveable in the conveying direction, and **in that** before the driving of the conveying member (4) in the conveying direction (10), the slide (6) is moveable into its open position by means of the adjusting means (15) through actuation by means of the regulating device (19).

## Revendications

1. °) Machine distributrice comportant un réservoir d'alimentation dont le fond comporte au moins un organe de transfert, de préférence en forme de bande transporteuse tournante, entraîné par des moyens d'entraînement, de façon réglable,
cet organe de transfert constituant l'organe de dosage avec au moins un orifice de sortie réglable à l'aide d'un tiroir, cet organe de dosage fournissant le produit du réservoir d'alimentation à au moins une installation de distribution, une installation de régulation électronique (19) étant prévue pour réguler la quantité de matière dosée par l'organe de dosage (16),
**caractérisée en ce qu'**
une installation de mesure de puissance motrice et/ou de couple est associée à l'entraînement (8) de l'organe de transfert (4),
l'installation de régulation (19) est reliée à cette installation de mesure, l'installation de régulation (19) est conçue pour qu'en cas de dépassement ou si on atteint une valeur limite fixée de la puissance motrice et/ou du couple, l'organe de transfert (4) est entraîné pendant un bref instant dans la direction opposée à la direction de transfert (10).

2. °) Machine distributrice selon la revendication 1,
**caractérisée en ce que**
l'installation de régulation est conçue pour qu'en réglant la quantité à distribuer sur la valeur « zéro », l'entraînement (8) de l'organe de transfert (4) est arrêté et/ou coupé de préférence par l'intermédiaire d'éléments de couplage.

3. °) Machine distributrice selon l'une ou plusieurs des revendications précédentes,
**caractérisée en ce que**
l'installation de régulation (19) est conçue pour que pour le réglage de la quantité à distribuer, les moyens d'entraînement (8) de la bande transporteuse (4) soient réglables pour régler la vitesse de transfert et que les moyens de réglage (15) du tiroir (6) soient réglables.

4. °) Machine distributrice selon une ou plusieurs des revendications précédentes,
**caractérisée en ce que**
dans la zone inférieure de la quantité à distribuer, on choisit prioritairement une petite vitesse de la bande en liaison avec une position du tiroir.

5. °) Machine distributrice selon une ou plusieurs des revendications précédentes,
**caractérisée en ce qu'**
en cas d'augmentation de la quantité à distribuer, on augmente la section de passage de l'orifice de sortie (7) en réglant le tiroir (6) en avance par rapport à l'augmentation de la vitesse de défilement de la bande transporteuse (4) et en cas de diminution de la quantité à distribuer, on diminue la vitesse de transfert de la bande transporteuse (4) en avance par rapport à la réduction de la section de passage de l'orifice de sortie (7) par le réglage du tiroir (6).

6. °) Machine distributrice selon une ou plusieurs des revendications précédentes,
**caractérisée en ce que**
l'installation de régulation (19) est conçue pour qu'avant le début de l'ouverture de l'orifice de passage (7), par le réglage du tiroir (6), on entraîne l'organe de transfert (4) au moins une fois tout d'abord brièvement dans la direction opposée à la direction de transfert (10), avant que l'organe de transfert (4) ne soit entraîné dans la direction de transfert (10), et **en ce qu'**avant d'entraîner l'organe de transfert (4) dans la direction de transfert (10), on conduit le tiroir (6) à l'aide des moyens de réglage (15) par la commande par l'installation de régulation (19) dans sa position d'ouverture.
